# EUROPÄISCHE PATENTSCHRIFT

(11) **EP 2 603 302 B1**
(45) Veröffentlichungstag und Bekanntmachung des Hinweises auf die Patenterteilung: **03.10.2018**
(21) Anmeldenummer: 11733585.1
(22) Anmeldetag: 08.07.2011
(51) Int. Cl.: B01D 39/16, B01D 46/00, B01D 46/52, B01D 29/11, B01D 29/21, B29C 65/08, B29C 65/00

(54) **VERFAHREN ZUM HERSTELLEN EINER FILTERMATTENBAHN**
METHOD FOR PRODUCING A FILTER MAT WEB
PROCÉDÉ DE FABRICATION D'UNE BANDE DE MATIÈRE FILTRANTE

(30) Priorität: 09.08.2010 DE 102010033797
(43) Veröffentlichungstag der Anmeldung: 19.06.2013
(73) Patentinhaber: Hydac Filtertechnik GmbH, 66280 Sulzbach/Saar (DE)
(72) Erfinder: EBERLE, Richard, 66399 Ormesheim (DE); MEES, Harald, 66822 Lebach (DE); DEWES, Markus, 66649 Oberthal (DE); KREIBIG, Micha, 66780 Rehlingen-Siersburg (DE); SCHWENDER, Matthias, 66459 Kirkel (DE)
(74) Vertreter: Bartels und Partner, Patentanwälte
(86) Internationale Anmeldenummer: PCT/EP2011/003427
(87) Internationale Veröffentlichungsnummer: WO 2012/019681

(56) Entgegenhaltungen:
- EP-A1- 2 168 652
- FR-A1- 2 518 893
- US-A- 5 240 479
- US-A- 5 830 311
- US-A1- 2007 084 787

## Beschreibung

Die Erfindung betrifft ein Verfahren zum Herstellen einer Filtermattenbahn mit den Merkmalen im Oberbegriff von Anspruch 1.

Filterelemente mit einem durch eine mehrlagige Filtermattenbahn gebildeten Filtermedium dienen zur Filtration von Flüssigkeiten, beispielsweise in Form von Hydrauliköl oder von Lösungen jedweder Art, beispielsweise in Form von echten Suspensionen, Dispersionen, Emulsionen oder kolloiden Lösungen, und haben sich wegen ihrer großen Filterfläche und ihrer kompakten Bauweise allgemein bewährt.

Die bekannten Filterelemente, wie sie auf dem Markt frei erhältlich sind, weisen eine aus mehreren Lagen verschiedener Filtermaterialien zusammengesetzte, zick-zack-förmig gefaltete oder plissierte Filtermattenbahn auf, die um ein massives, im Inneren des Filterelementes angeordnetes, mit Durchlässen versehenes Stützrohr herumgelegt ist. Der mehrlagige Aufbau einer solchen Filtermattenbahn kann beispielsweise von der einen Seite zur anderen Seite hin folgenden Schichtaufbau aufweisen:
1. Metalldrahtgewebe oder Kunststoffgewebe oder Kunststoffgitter mit Netzstruktur,
2. Polyestervlies,
3. Glasfasermatte oder Melt-Blown-Vlies,
4. Papiervlies, Glasfasermatte oder Melt-Blown-Vlies,
5. Polyestervlies,
6. Edelstahl-Polyester-Mischgewebe, Metalldrahtgewebe oder Kunststoffgewebe oder Kunststoffgitter mit Netzstruktur.

Im Zuge rationeller Fertigung wird eine derart mehrschichtig zusammengesetzte Mattenbahn in Bahnlängsrichtung durch eine Schneideinheit hindurchgeführt, in der die Bahn randseitig nach Maß zugeschnitten wird, bevor sie zu einer Faltmaschine weiterbewegt wird, in der die Zick-Zack-Form oder das Plissee gebildet wird. Im weiteren Verlauf der Fertigung wird sodann die zugeschnittene Bahn in Bahnabschnitte aufgetrennt, aus denen dann die fertige Filtermattenbahn zu einem Rohrkörper geformt wird.

Um einen sicheren Betrieb der in vielen Fällen hochwertigen Anlagen zu gewährleisten, bei denen Filterelemente mit derartigen Filtermattenbahnen zum Einsatz kommen, ist es von ausschlaggebender Bedeutung, dass die als Endprodukt hergestellten Filtermattenbahnen hohen Anforderungen genügen, beispielsweise hinsichtlich Maßhaltigkeit, Homogenität des Aufbaues, Formstabilität oder dergleichen. In Anbetracht des mehrlagigen Aufbaues aus Glasfasermaterial, Vliesen, Gewebe- oder Gitterstrukturen lassen sich diese Anforderungen beim Herstellungsprozeß nicht ohne weiteres erfüllen. So kann es bei der Handhabung und den Arbeitsgängen an der Mattenbahn zu einem Delaminieren von Lagen mit entsprechendem Stabilitätsverlust kommen. Gleiche Beeinträchtigungen können sich auch am fertigen Endprodukt beim späteren Filtrationsbetrieb durch die mechanischen Belastungen der Filtermattenbahn durch Strömungskräfte ergeben.

Die US 5 240 479 beschreibt ein Verfahren zum Herstellen einer Filtermattenbahn zum Durchströmen von einem Fluid, bestehend aus zumindest einer Gruppe aus mindestens zwei miteinander benachbart zu verbindenden Einzellagen, wobei die Verbindung in definierten Verbindungsbereichen erfolgt, wobei zumindest ein Großteil der Verbindungsbereiche innerhalb der Filtermattenbahn im Abstand von Randbereichen derselben angeordnet wird und wobei die Verbindungsbereiche der Einzellagen jeweiliger Gruppen derart vorgesehen werden, dass ein Delaminieren von Lagen der Filtermattenbahn verhindert wird.

Filtermattenbahnen gehen auch aus der US 2007/0084787 A1, der EP 2 168 652 A1, der US 5 830 311 und der FR 2 518 893 hervor.

Im Hinblick auf diese Problematik liegt der Erfindung die Aufgabe zugrunde, eine Filtermattenbahn der betrachteten Art zur Verfügung zu stellen, die den an derartige Filtermattenbahnen zu stellenden Anforderungen in besonderem Maße gerecht wird.

Erfindungsgemäß ist diese Aufgabe durch ein Verfahren zum Herstellen einer Filtermattenbahn gelöst, das die Verfahrensschritte des Patentanspruches 1 in seiner Gesamtheit aufweist.

Gemäß dem Kennzeichen von Anspruch 1 ist vorgesehen, dass jede Einzelgruppe von miteinander verbundenen Einzellagen in einem ersten Verbindungsschritt separat hergestellt wird und dass in einem weiteren Verbindungsschritt die zuordenbaren Einzelgruppen unter Bildung der Filtermattenbahn derart miteinander verbunden werden, dass die Verbindungsbereiche übereinanderliegend oder sich kreuzend oder deckungsfrei nebeneinander verlaufend angeordnet werden, und dass die Filtermattenbahn schließlich einem Faltvorgang unterzogen wird. Insbesondere bei Filtermattenbahnen aus einer größeren Anzahl von Einzellagen ermöglicht das die Ausbildung einer besonders strukturfesten Filtermattenbahn.

Während beim Stand der Technik die Verbindung der einzelnen Lagen an den Filtermattenenden erfolgt, beispielsweise um den aus der plissierten Filtermattenbahn geformten Rohrkörper zu schließen, ist erfindungsgemäß zumindest ein Großteil der Verbindungsbereiche innerhalb der Filtermattenbahn im Abstand von Randbereichen angeordnet, wobei die Verbindungsbereiche der Einzellagen jeweiliger Gruppen derart deckungsgleich miteinander sind, dass ein Delaminieren von Lagen der Filtermattenbahn verhindert ist. Durch einen derartigen Verbindungsaufbau ist nicht nur die Gefahr der Destabilisierung und von Verformungen während der Handhabungs- und Bearbeitungsschritte der Filtermattenbahn, etwa beim Faltvorgang, sicher verhindert, sondern es ist insbesondere die Gefahr beseitigt, dass beim späteren Filterbetrieb mit der Filtermattenbahn aufgrund der wirkenden Betriebsbelastungen ein Delaminieren erfolgt. Es resultiert eine erhöhte Betriebssicherheit und Stabilität des für die Filterleistung maßgebenden β-Wertes, auch bei hohen Durchflussleistungen, weil keine Verformungen der Falten (Beulen) auftreten. Auch ergibt sich eine erhöhte Differenzdruck-Stabilität mit entsprechend verbessertem Lang-Standzeit-verhalten.

Mit besonderem Vorteil können die entlang der Verbindungsbereiche miteinander zu verbindenden Einzellagen von außen und von mindestens einer Seite her mittels eines Verbindungsverfahrens, wie Schweißen oder Nadeln, hergestellt sein, oder können derart mittels eines Klebeverfahrens verbunden sein, dass zwischen den benachbarten Flächenbereichen der Einzellagen der Klebstoffeintrag oder -auftrag erfolgt. Insbesondere dann, wenn die Verbindungsbereiche von Einzelgruppe zu Einzelgruppe nicht zueinander deckungsgleich oder sich kreuzend übereinander liegen, kann die Verbindung mit besonderem Vorteil durch Nadeln durchgeführt werden. Schweißverfahren können in jedwedem Falle mit Vorteil angewendet werden, da der mehrlagige Aufbau der Filtermattenbahn Werkstoffe mit guten thermischen Schweißeigenschaften enthält, beispielsweise Polyamid- oder Polyester-Werkstoffe. Der Schweißvorgang kann mittels Ultraschallschweißen oder Laserschweißen daher ohne Schweißzusatzstoffe ausgeführt werden. Solche Schweißzusatzstoffe können jedoch auch zum Einsatz kommen.

Hinsichtlich der Gestaltung der Verbindungsbereiche kann die Anordnung so getroffen sein, dass diese in der Art von Clustern gezielt oder wahllos angeordnet sind, so dass ein regelmäßiges oder unregelmäßiges Muster in die Filterfläche verteilter Verbindungsstellen gebildet ist.

Mit Vorteil kann jedoch auch so vorgegangen sein, dass die Verbindungsbereiche in zumindest einer linienförmig verlaufenden Verbindungsbahn angeordnet sind.

Derartige Verbindungsbahnen können mit geradlinigem Verlauf vorgesehen sein oder mit die Richtung änderndem Verlauf, etwa in Wellen- oder Rautenform oder dergleichen.

Im letzteren Fall können die Verbindungsbahnen sich überkreuzend verlaufen. An den Überkreuzungsstellen können, beispielsweise für die gegenseitige Verbindung benachbarter Gruppen von Einzellagen, die diesbezüglichen Verbindungsstellen, etwa in Form von Schweißpunkten gebildet sein.

Während sich der Großteil der Verbindungsbereiche innerhalb der Filtermattenbahn befindet, also von Randbereichen der Filtermattenbahn beabstandet ist, können Filterbahnen so verlaufen, dass sie an Randbereichen der Filtermattenbahn enden.

Bei Verbindungsbereichen in Form von Verbindungsbahnen können diese innerhalb der Filtermattenbahn so geführt sein, dass definierte Filterbereiche mit vorgebbarer Filterfläche geschaffen sind, die randseitig von der jeweiligen Verbindungsbahn in abstützender Weise zumindest teilweise umschlossen sind. Bei derartig randseitig abgestützten Filterbereichen ergeben sich im Filterbetrieb besonders gute Filtereigenschaften, wie Differenzdruck-Stabilität und β-Stabilität.

Nachstehend ist die Erfindung anhand der Zeichnung im Einzelnen erläutert. Es zeigen:
- Fig. 1: eine Draufsicht einer gefalteten Filtermattenbahn gemäß dem Stand der Technik, herumgelegt um ein geschnitten dargestelltes Stützrohr eines Filterelementes;
- Fig. 2 bis 8: schematisierte, skizzenhafte Darstellungen zur Verdeutlichung einiger Beispiele für die Verteilung und den Verlauf von Verbindungsbereichen bei Ausführungsbeispielen der erfindungsgemäßen Filtermattenbahn;
- Fig. 9: in einer nicht maßstäblichen Schemaskizze einen Teillängsschnitt eines Ausführungsbeispiels der erfindungsgemäßen Filtermattenbahn und einer Ultraschall-Schweißeinrichtung zur Ausbildung einer Verbindungsbahn in Form eines geradlinigen Verbindungsstreifens; und
- Fig. 10: in teilweise aufgeschnittener Darstellung den oberen Teil eines Filterelementes mit einer Filtermattenbahn gemäß einem Ausführungsbeispiel der Erfindung.

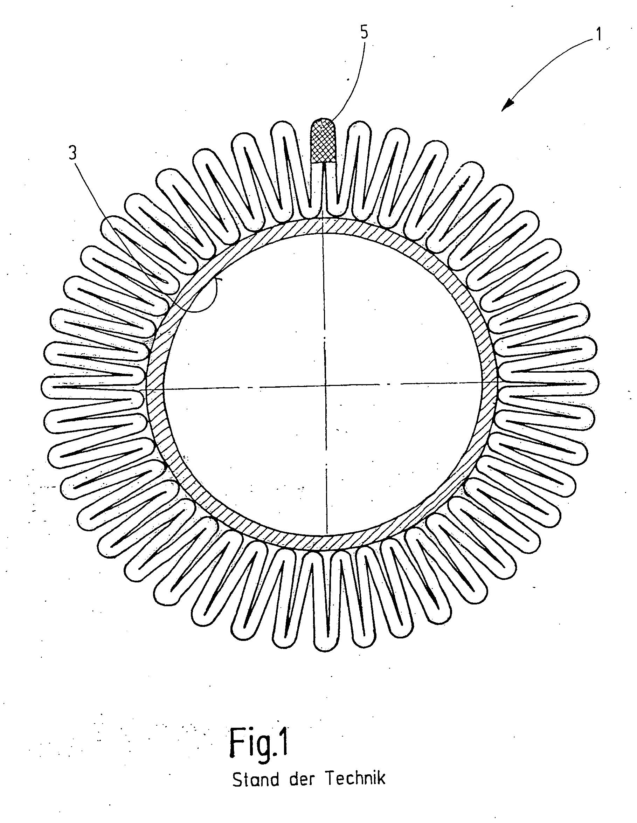

Die Fig. 1 zeigt eine gefaltete Filtermattenbahn 1 gemäß dem Stand der Technik, die zu einem runden Rohrkörper geformt um ein fluiddurchlässiges Stützrohr 3 eines im übrigen nicht gezeigten Filterelementes herumgelegt ist. Der Verbindungsbereich 5 der mehrlagig aufgebauten Filtermattenbahn 1 ist an den den Verschluss des Rohrkörpers bildenden, endseitigen, aneinanderstoßenden Längsrändern gebildet. Dieser in Fig. 1 mit 5 bezeichnete Verbindungsbereich ist durch Verschweißen oder Verkleben der aneinanderliegenden Längsränder gebildet. Wenn beim Filtrationsbetrieb die in Fig. 1 gezeigte Filtermattenbahn 1 von außen nach innen durchströmt wird, ist diese gegen die Strömungskräfte am Stützrohr 3 abgestützt, es kann jedoch unter Einwirkung der Strömung zu Verformungen der Falten einschließlich Relativbewegungen im Aufbau der Lagen der Filtermattenbahn 1 kommen. Die Gefahr entsprechender Destabilisierung besteht zudem während des Herstellungsprozesses der Filtermattenbahn 1, insbesondere in Form von Delaminierungen beim Faltvorgang.

Um diesen Gefahren zu begegnen, sieht die Erfindung Verbindungsbereiche 5 innerhalb der Filtermattenbahn 1, also innerhalb der gebildeten Filterfläche vor, wobei die Verbindungsbereiche 5 so angeordnet sind, dass innerhalb der Filterfläche definierte Filterbereiche 7, die lediglich in einigen Figuren beziffert sind, von Verbindungsbereichen 5 frei bleiben. Da der jeweilige Verbindungsbereich, etwa in Form einer linienhaften Verbindungsbahn 5 zu einer örtlichen Verdichtung der wirksamen Filterfläche mit entsprechender Erhöhung des Durchflusswiderstandes führt, wird das Anordnungsmuster der Verbindungsbereiche 5 so gewählt, dass mit den freibleibenden Filterbereichen 7 die gewünschten Durchflusseigenschaften der Filtermattenbahn 1 realisiert sind.

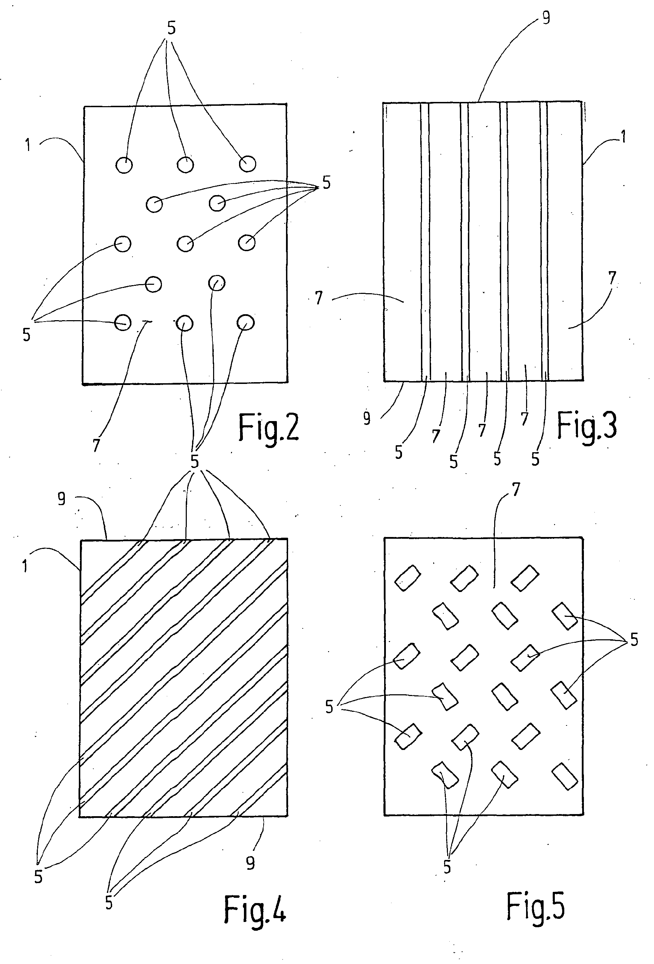

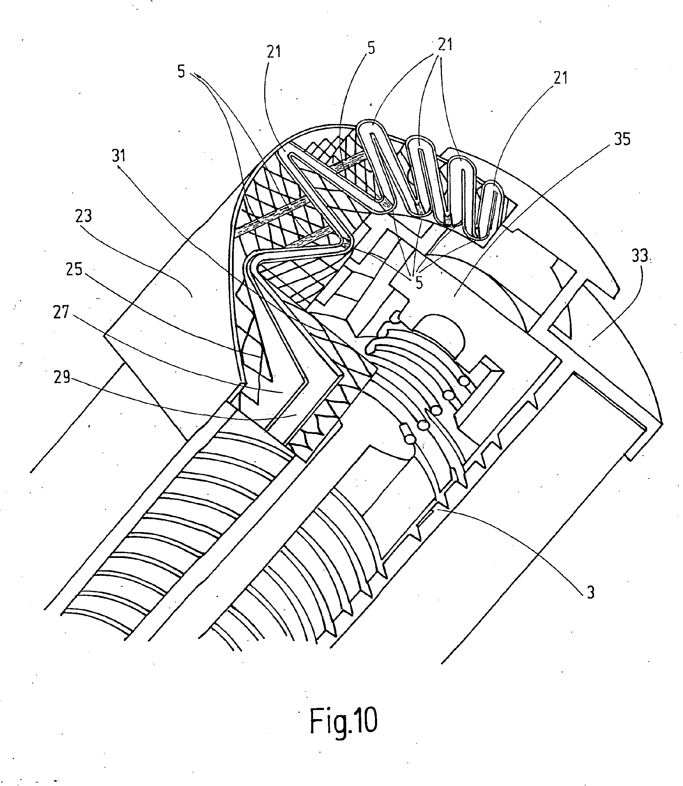

Die Fig. 2 und 5 verdeutlichen die Gestaltung der Verbindungsbereiche 5 in der Art von einzelnen Clustern, die wahllos oder in gezielter Musteranordnung angeordnet sein können. Fig. 3 und 4 zeigen Verbindungsbereiche 5 in Form gerader Verbindungsbahnen, die sich zwischen gegenüberliegenden Randbereichen 9 der Filtermattenbahn 1 durchgehend erstrecken. Hierbei sind die Verbindungsbereiche 5 in Fig. 3 zum Verlauf der Randbereiche 9 orthogonal. Beim Faltvorgang können die Verbindungsbereiche 5 daher entlang von Filterfalten 21 verlaufen, worauf anhand der Fig. 10 noch eingegangen wird.

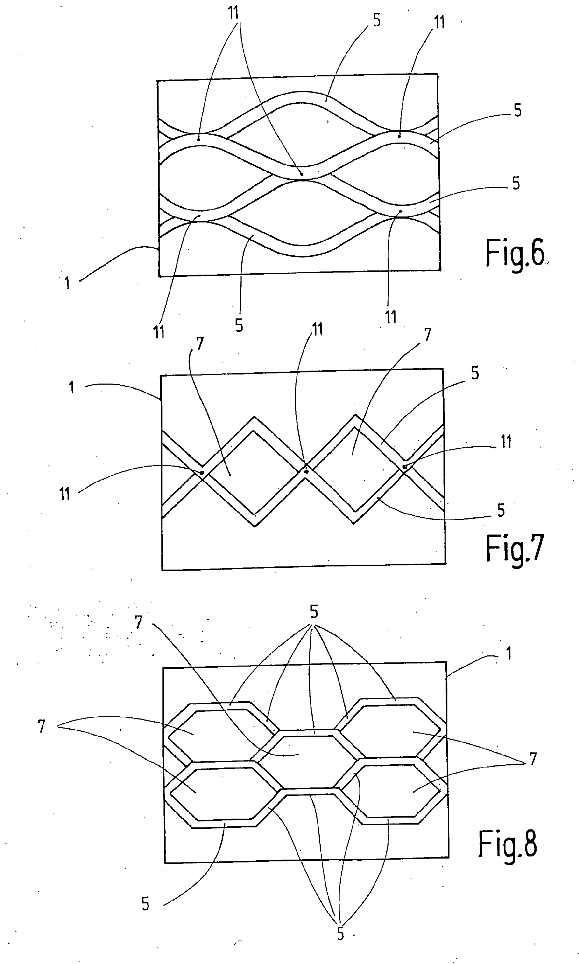

Die Fig. 6 bis 8 verdeutlichen Verbindungsbereiche 5, die in Form von ihre Richtung ändernden Verbindungsbahnen gestaltet sind. Diesbezüglich zeigt Fig. 6 einen wellenförmigen Verlauf unter Bildung von Überkreuzungsstellen 11. Die Fig. 7 und 8 zeigen einen abgewinkelten Verlauf zur Bildung rechteckförmiger Filterbereiche 7, während Fig. 8 einen rautenförmigen Verlauf verdeutlicht.

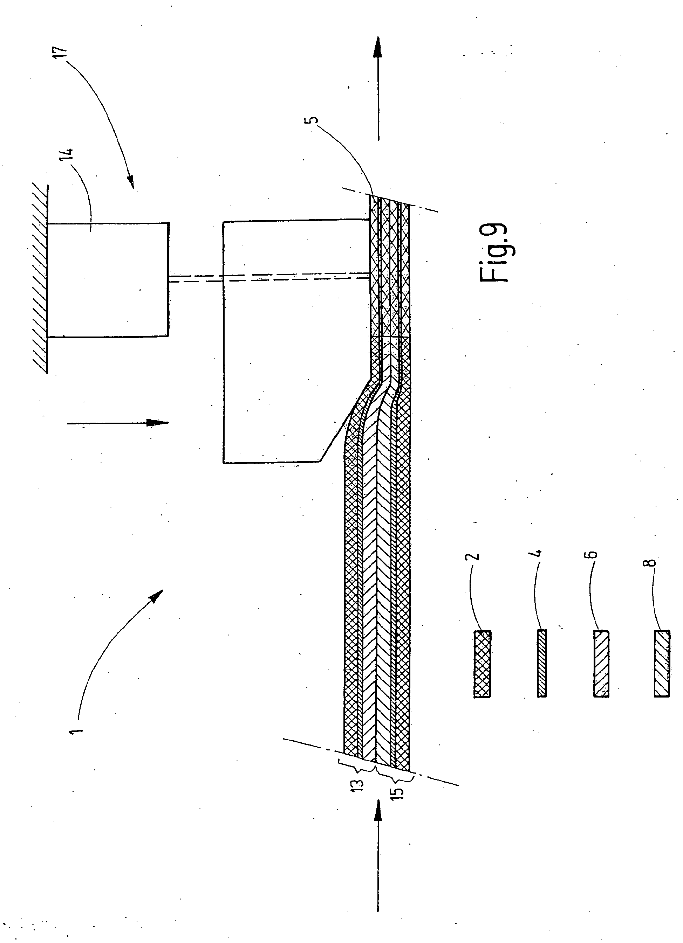

Die Verbindungsbereiche 5 können durch Schweißen oder Nadeln oder mittels eines Klebeverfahrens gebildet sein, wobei im letzteren Falle der Klebstoffeintrag oder -auftrag jeweils zwischen Einzellagen erfolgt. Wenn es sich bei der Filtermattenbahn 1 um einen Aufbau handelt, der eine größere Anzahl von Einzellagen aufweist, wird vorzugsweise so vorgegangen, dass mehrere Gruppen 13 und 15 (Fig. 9) aus einer Teilanzahl der Lagen, die mittels Verbindungsbereichen 5 aneinander festgelegt sind, hergestellt werden und sodann diese Einzelgruppen 13,15 wiederum über Verbindungsbereiche 5 miteinander verbunden werden, wobei diese Verbindungsbereiche 5 mit den Verbindungsbereichen 5 der Einzelgruppen 13,15 deckungsgleich oder sich kreuzend oder deckungsfrei nebeneinander verlaufend angeordnet sein können.

Die Fig. 9 zeigt in nicht maßstäblicher Darstellung die Bildung eines linienförmigen Verbindungsbereiches 5 an einer Filtermattenbahn 1 aus sechs Lagen. Hierbei ist die Filtermattenbahn 1 aus zwei jeweils aus drei Lagen bestehenden Einzelgruppen 13 und 15 gebildet, wobei die Gruppen 13 und 15 vor der Bildung des Gesamtverbundes zuvor über Verbindungsbereiche 5 miteinander verbunden wurden. Die Filtermatte 1 kann, wie in Fig. 9 mit Bezugszahlen teilweise kenntlich gemacht ist, beispielsweise von außen nach innen folgenden Schichtaufbau aufweisen:
1. Metalldrahtgewebe oder Kunststoffgewebe oder Kunststoffgitter mit Netzstruktur (2 in Fig. 9),
2. Polyestervlies (4 in Fig. 9),
3. Glasfasermatte oder Melt-Blown-Vlies (6 in Fig. 9),
4. Papiervlies, Glasfasermatte oder Melt-Blown-Vlies (8 in Fig. 9),
5. Polyestervlies (4 in Fig. 9),
6. Edelstahl-Polyester-Mischgewebe, Metalldrahtgewebe oder Kunststoffgewebe oder Kunststoffgitter mit Netzstruktur (2 in Fig. 9).

Die Fig. 9 zeigt zur Ausbildung des linienförmigen Verbindungsbereiches 5 eine Schweißeinheit 17 in Form einer Laser-Schweißvorrichtung, wobei ein ortsfester Laser 19 in Verbindung mit einer nicht näher dargestellten Sperrschicht für Laserlicht in üblicher Weise die thermische Energie für den Schweißvorgang liefert. Um den die Einzelgruppen 13 und 15 miteinander verbindenden Verbindungsbereich 5 zu bilden, kann ein Laser 19 auch beidseitig, also über oder unter der Bahn 1 angeordnet sein.

Fig. 10 zeigt in aufgebrochen, geschnitten und schematisch vereinfachter Darstellung den oberen Teil eines Filterelementes mit einer Filtermattenbahn 1 gemäß einem Ausführungsbeispiel der Erfindung. Die Filtermattenbahn 1 stützt sich mit ihren Filterfalten 21 am inneren, fluiddurchlässigen Stützrohr 3 ab und ist außenseitig von einem äußeren, zylindrischen Gehäusemantel 23 umgeben, der ebenfalls fluiddurchlässig ist. Der besseren Darstellung wegen sind die einzelnen Filterfalten 21 teilweise auseinandergezogen dargestellt, wobei sich der Einzellagenaufbau der plissierten Filtermattenbahn 1 aus der dem Betrachter der Fig. 10 zugewandten Teiledarstellung ergibt. Dementsprechend ist eine als Stützgewebe dienende erste Lage 25, eine zweite Lage 27 als Schutzvlies, eine dritte Lage 29 als Hauptvlies, eine vierte Lage 31 wiederum als Stützgewebe vorhanden. Die Enden der Filtermattenbahn 1 sind jeweils in einer Endkappe aufgenommen, wobei in der Fig. 10 nur die obere Endkappe 33 dargestellt ist, die im Übrigen ein federbelastetes Bypassventil 35 umfasst, das aus Sicherheitsgründen einen Fluiddurchlass ermöglicht, auch wenn die Filtermattenbahn 1 von Verschmutzungen zugesetzt ist.

Bei dem in Fig. 10 gezeigten Beispiel weist die Filtermattenbahn nicht nur Verbindungsbereiche 5 in Form von zu den Filterfalten 21 quer verlaufenden Verbindungsbahnen 5 auf, sondern eine Besonderheit besteht auch darin, dass entlang der Falten 21 an dem am Stützrohr 3 anliegenden Faltengrund Verbindungsbahnen 5 ausgebildet sind, so dass sich die Filtermattenbahn 1 mit stabilisierten Bereichen am Stützrohr 3 abstützt.

## Patentansprüche

1. Verfahren zum Herstellen einer Filtermattenbahn, bestehend aus zumindest zwei Gruppen (13, 15) aus mindestens zwei miteinander benachbart zu verbindenden Einzellagen (25, 27, 29, 31), wobei die Verbindung in definierten Verbindungsbereichen (5) erfolgt, wobei zumindest ein Großteil der Verbindungsbereiche (5) innerhalb der Filtermattenbahn (1) im Abstand von Randbereichen (9) derselben angeordnet wird und wobei die Verbindungsbereiche (5) der Einzellagen (25, 27, 29, 31) jeweiliger Gruppen (13, 15) derart vorgesehen werden, dass ein Delaminieren von Lagen (25, 27, 29, 31) der Filtermattenbahn (1) verhindert wird, **dadurch gekennzeichnet, dass** jede Einzelgruppe (13, 15) von miteinander verbundenen Einzellagen (25, 27, 29, 31) in einem ersten Verbindungsschritt separat hergestellt wird, dass in einem weiteren Verbindungsschritt die zuordenbaren Einzelgruppen (13, 15) unter Bildung der Filtermattenbahn (1) derart miteinander verbunden werden, dass die Verbindungsbereiche (5) übereinanderliegend oder sich kreuzend oder deckungsfrei nebeneinander verlaufend angeordnet werden, und dass die Filtermattenbahn (1) schließlich einem Faltvorgang unterzogen wird.

2. Verfahren zum Herstellen einer Filtermattenbahn nach Anspruch 1, **dadurch gekennzeichnet, dass** die entlang der Verbindungsbereiche (5) miteinander zu verbindenden Einzellagen (25, 27, 29, 31) von außen und von mindestens einer Seite her mittels eines Verbindungsverfahrens, wie Schweißen oder Nadeln, hergestellt werden oder derart mittels eines Klebeverfahrens verbunden werden, dass zwischen den benachbarten Flächenbereichen der Einzellagen (25, 27, 29, 31) der Klebstoffeintrag oder -auftrag erfolgt.

3. Verfahren zum Herstellen einer Filtermattenbahn nach Anspruch 1 oder 2, **dadurch gekennzeichnet, dass** die Verbindungsbereiche in der Art von Clustern (5) gezielt oder wahllos angeordnet werden.

4. Verfahren zum Herstellen einer Filtermattenbahn nach einem der vorstehenden Ansprüche, **dadurch gekennzeichnet, dass** die Verbindungsbereiche in zumindest einer linienförmig verlaufenden Verbindungsbahn (5) angeordnet werden.

5. Verfahren zum Herstellen einer Filtermattenbahn nach Anspruch 4, **dadurch gekennzeichnet, dass** die Verbindungsbereiche in einer geraden Verbindungsbahn (5) angeordnet werden.

6. Verfahren zum Herstellen einer Filtermattenbahn nach Anspruch 4, **dadurch gekennzeichnet, dass** die Verbindungsbereiche in ihre Richtung ändernden Verbindungsbahnen (5), etwa in Wellen- oder Rautenform, angeordnet werden.

7. Verfahren zum Herstellen einer Filtermattenbahn nach einem der Ansprüche 4 bis 6, **dadurch gekennzeichnet, dass** sich überkreuzende (11) Verbindungsbahnen (5) gebildet werden.

8. Verfahren zum Herstellen einer Filtermattenbahn nach einem der Ansprüche 1 bis 7, **dadurch gekennzeichnet, dass** die Verbindungsbereiche (5) von den Rändern (9) der Filtermattenbahn (1) beabstandet angeordnet werden.

9. Verfahren zum Herstellen einer Filtermattenbahn nach einem der Ansprüche 4 bis 7, **dadurch gekennzeichnet, dass** die Verbindungsbahnen derart angeordnet werden, dass Verbindungsbahnen (5) an Randbereichen (9) der Filtermattenbahn (1) enden.

10. Verfahren zum Herstellen einer Filtermattenbahn nach einem der Ansprüche 4 bis 9, **dadurch gekennzeichnet, dass** die Verbindungsbahnen (5) derart innerhalb der Filtermattenbahn (1) geführt werden, dass definierte Filterbereiche (7) mit vorgebbarer Filterfläche geschaffen werden, die randseitig von der jeweiligen Verbindungsbahn (5) in abstützender Weise zumindest teilweise umschlossen sind.

11. Verfahren zum Herstellen einer Filtermattenbahn nach einem der vorstehenden Ansprüche, **dadurch gekennzeichnet, dass** die Verbindungsbereiche (5) derart angeordnet werden, dass der jeweilige Verbindungsbereich (5) zu einer Verdichtung der wirksamen Filterfläche führt, so dass es gegenüber der eigentlichen Filterfläche (7) zu einer Erhöhung des Durchflusswiderstandes im Filtrierbetrieb kommt.

12. Verfahren zum Herstellen einer Filtermattenbahn nach einem der vorstehenden Ansprüche, **dadurch gekennzeichnet, dass** die jeweilige Einzellage (25, 27, 29, 31) aus einem gut schweißbaren und/oder klebbaren Material besteht, wie Polyester, Melt-Blown-Fasern, Glasfasern, Carbon oder Metallwerkstoffen.

## Claims

1. A method for producing a filter mat web, consisting of at least two groups (13, 15) of at least two individual layers (25, 27, 29, 31) which are adjacent to one another and are to be connected, wherein the connection takes place in defined connecting regions (5), wherein at least a majority of the connecting regions (5) is arranged within the filter mat web (1) at a distance from edge regions (9) of same, and wherein the connecting regions (5) of the individual layers (25, 27, 29, 31) of each of the groups (13,15) are provided such that a delamination of layers (25, 27, 29, 31) of the filter mat web (1) is prevented, **characterised in that** each individual group (13, 15) of individual layers (25, 27, 29, 31) which are connected to one another is produced separately in a first connection step, that in a further connection step the individual groups (13, 15) which are to be assigned are connected to one another accompanied by the formation of the filter mat web (1) such that the connecting regions (5) are arranged lying upon one another or intersecting or running next to one another without coverage, and that the filter mat web (1) is eventually subjected to a folding process.

2. The method for producing a filter mat web according to claim 1, **characterised in that** the individual layers (25, 27, 29, 31) to be connected to one another along the connecting regions (5) are produced from outside and from at least one side by means of a connection method, such as welding or needling or are connected by means of an adhesive method such that adhesive is inserted or applied between the adjacent surface regions of the individual layers (25, 27, 29, 31).

3. The method for producing a filter mat web according to claim 1 or 2, **characterised in that** the connecting regions are arranged in targeted manner or at random in the manner of clusters (5).

4. The method for producing a filter mat web according to one of the preceding claims, **characterised in that** the connecting regions are arranged in at least one connecting web (5) running in linear manner.

5. The method for producing a filter mat web according to claim 4, **characterised in that** the connecting regions are arranged in a straight connecting web (5).

6. The method for producing a filter mat web according to claim 4, **characterised in that** the connecting regions are arranged, in connecting webs (5), for example in wave or lozenge-shape, which change direction.

7. The method for producing a filter mat web according to one of claims 4 to 6, **characterised in that** connecting webs (5) which intersect (11) are formed.

8. The method for producing a filter mat web according to one of claims 1 to 7, **characterised in that** the connecting regions (5) are arranged at a distance from the edges (9) of the filter mat web (1).

9. The method for producing a filter mat web to according to one of claims 4 to 7, **characterised in that** the connecting webs are arranged such that connecting webs (5) end at edge regions (9) of the filter mat web (1).

10. The method for producing a filter mat web according to one of claims 4 to 9, **characterised in that** the connecting webs (5) are guided inside the filter mat web (1) such that defined filter regions (7) with a predeterminable filter surface are created the edges of which are surrounded in supporting manner, at least partially, by the respective connecting web (5).

11. The method for producing a filter mat web according to one of the preceding claims, **characterised in that** the connecting regions (5) are arranged such that the respective connecting region (5) leads to a consolidation of the effective filter surface, with the result that opposite the actual filter surface (7) there is an increase in the throughflow resistance in the filter operation.

12. The method for producing a filter mat web according to one of the preceding claims, **characterised in that** the respective individual layer (25, 27, 29, 31) consists of an easily-weldable and/or adhesive material, such as polyester, melt-blown fibres, glass fibres, carbon or metal materials.

## Revendications

1. Procédé de production d'une bande de matière filtrante, constituée d'au moins deux groupes (13, 15) de couches (25, 27, 29, 31) individuelles à relier entre elles de manière voisine, la liaison s'effectuant dans des régions (5) de liaison définies, au moins une grande partie des régions (5) de liaison étant mise, au sein de la bande (1) de matière filtrante, à distance de régions (9) de bord de celle-ci et dans lequel les régions (5) de liaison des couches (25, 27, 29, 31) individuelles de chaque groupe (13, 15) sont prévues de manière à empêcher une délamination de couches (25, 27, 29, 31) de la bande (1) de matière filtrante, **caractérisé en ce que** l'on produit séparément, dans un premier stade de liaison, chaque groupe (13, 15) individuel de couches (25, 27, 29, 31) individuelles à relier ensemble, **en ce que**, dans un autre stade de liaison, on relie ensemble les groupes (13, 15) individuels pouvant être associés avec formation de la bande (1) de matière filtrante, de manière à ce que les régions (5) de liaison soient disposées les unes au-dessus des autres ou en se croisant ou en s'étendant les unes à côté des autres sans recouvrement et **en ce que**, finalement, on soumet la bande (1) de matière filtrante à une opération de plissage.

2. Procédé de production d'une bande de matière filtrante suivant la revendication 1, **caractérisé en ce que** l'on produit les couches (25, 27, 29, 31) individuelles, à relier entre elles le long des régions (5) de liaison, de l'extérieur et par au moins un côté au moyen d'un procédé de liaison, comme de soudage ou d'aiguilletage, ou on les relie au moyen d'un procédé de collage, de manière à produire l'incorporation ou le dépôt de colle entre les régions de surface voisines des couches (25, 27, 29, 31) individuelles.

3. Procédé de production d'une bande de matière filtrante suivant la revendication 1 ou 2, **caractérisé en ce que** l'on dispose, de façon ciblée ou sans choix, les régions de liaison à la manière d'essaim.

4. Procédé de production d'une bande de matière filtrante suivant l'une des revendications précédentes, **caractérisé en ce que** l'on dispose les régions de liaison suivant au moins une bande (5) de liaison ligniforme.

5. Procédé de production d'une bande de matière filtrante suivant la revendication 4, **caractérisé en ce que** l'on dispose les régions de liaisons suivant une bande (5) de liaison rectiligne.

6. Procédé de production d'une bande de matière filtrante suivant la revendication 4, **caractérisé en ce que** l'on dispose les régions de liaison en des bandes (5) de liaison, dont la direction se modifie, par exemple sous forme ondulée ou de losange.

7. Procédé de production d'une bande de matière filtrante suivant l'une des revendications 4 à 6, **caractérisé en ce que** l'on forme des bandes (5) de liaison s'entrecroisant (11) .

8. Procédé de production d'une bande de matière filtrante suivant l'une des revendications 1 à 7, **caractérisé en ce que** l'on dispose les régions (5) de liaison à distance des bords (9) de la bande (1) de matière filtrante.

9. Procédé de production d'une bande de matière filtrante suivant l'une des revendications 4 à 7, **caractérisé en ce que** l'on dispose les bandes de liaison de manière à ce que des bandes (5) de liaisons se terminent aux régions (9) de bord de la bande (1) de matière filtrante.

10. Procédé de production d'une bande de matière filtrante suivant l'une des revendications 4 à 9, **caractérisé en ce que** l'on fait passer les bandes (5) de liaison au sein de la bande (1) de matière filtrante, de manière à ménager des régions (7) filtrantes définies de surfaces filtrantes pouvant être données à l'avance, qui sont entourées, au moins en partie, de manière à donner un appui du côté du bord par la bande (5) de liaison respective.

11. Procédé de production d'une bande de matière filtrante suivant l'une des revendications précédentes, **caractérisé en ce que** l'on dispose les régions (5) de liaison de manière à ce que la région (5) de liaison respective donne une densification de la surface filtrante efficace, de façon à obtenir, par rapport à la surface (7) filtrante proprement dite, une augmentation de la résistance au passage en fonctionnement en filtre.

12. Procédé de production d'une bande de matière filtrante suivant l'une des revendications précédentes, **caractérisé en ce que** les couches (25, 27, 29, 31) individuelles respectives sont en une matière pouvant bien se souder et/ou se coller, comme en polyester, en fibres melt-blown, en fibres de verre, en carbone ou en matériaux métalliques.
